# EUROPEAN PATENT SPECIFICATION

(11) **EP 0 545 880 B1**
(45) Date of publication and mention of the grant of the patent: **26.07.1995**
(21) Application number: 92850283.0
(22) Date of filing: 04.12.1992
(51) Int. Cl.: F16F 15/32

(54) **Method for fixing of a material used for balancing of a roll and construction used in the balancing of a roll**
Methode zum Befestigen eines Materials für das Ausgleichen einer Rolle und dafür vorgesehene Konstruktion
Méthode pour la fixation d'un matériau utilisé pour l'équilibrage d'un rouleau et construction utilisée pour tel équilibrage

(30) Priority: 05.12.1991 FI 915750
(43) Date of publication of application: 09.06.1993
(73) Proprietor: VALMET PAPER MACHINERY INC., 00620 Helsinki (FI)
(72) Inventor: Järvelä, Juha, SF-40640 Jyväskylä (FI)
(74) Representative: Wallin, Bo-Göran

(56) References cited:
- DE-A- 2 543 203
- GB-A- 1 142 942
- US-A- 3 659 434
- US-A- 5 096 734

## Description

The invention concerns a method for fixing of a materia used for balancing of a roll and a construction used in the balancing of a roll.

From prior art, a method and an equipment for the balancing of paper-machine cylinders and rolls are known, wherein a balancing material that is fluidized is placed on the inside face of the roll at the location required by the balancing, where the material is fixed and hardens. The balancing material that is used is polyurethane or silicone mix or epoxy resin.

In the present invention, attempts have been made to find a solution by whose means reliable fixing of the balancing material at the balancing location is ensured. In the invention, inside the roll, a support and fitting construction, preferably a net, is used, to which the balancing material is applied as fluid and in which support and fixing construction the material hardens and is fixed after the application.

The balancing method in accordance with the invention is mainly characterized in that, before the fluidized balancing material is placed into the roll, a support and fixing construction for the fluidized balancing material is placed into the roll interior, which construction will be placed in contact with the inner face of the roll over a part of the axial distance only, and that the support and fixing construction comprises openings or equivalent, which permit the balancing material to be placed at both sides of the support and fixing construction before the fluidized balancing material hardens and is fixed at the location required by the balancing in the support and fixing construction.

The construction in accordance with the invention used in the balancing is mainly characterized in that a support and fixing construction is provided for the balancing material, which support and fixing construction is a circumferential construction, which is in contact with the inner face of the roll over a part of the axial distance only and which support and fixing construction, comprises openings or equivalent, through which the fluidized balancing material flows to both sides of the support and fixing construction before it hardens and is fixed to the support and fixing construction, whereby the support and fixing construction forms a support and fixing base for the balancing material.

The invention will be described in the following with reference to some preferred embodiments of the invention illustrated in the figures in the accompanying drawings, the invention being, however, not supposed to be confined to said embodiments alone.

Figure 1A is a longitudinal sectional view of a paper-machine roll, and in its connection a description is given of the prior art.

Figure 1B shows a solution in accordance with the invention.

Figure 2A illustrates a method and a balancing construction in accordance with the invention. What is shown is a longitudinal sectional view of a paper-machine roll.

Figure 2B is a sectional view taken along the line I-I in Fig. 2A.

Figure 3 is a partial sectional view of a roll that comprises a net construction as the support and fixing construction for balancing.

Figure 4 is an axonometric illustration in part of a second advantageous embodiment of a central support and fixing construction for balancing.

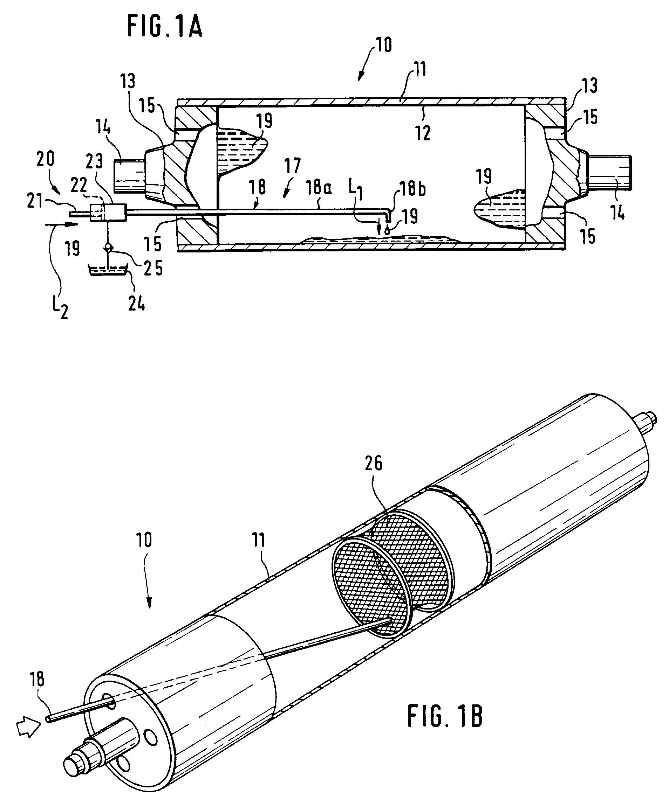

Fig. 1A illustrates a prior-art method and equipment. The roll 10 comprises a roll mantle 11, at whose ends there are flange axles 13. The flange axle 13 includes a hole 15 passing through the flange, preferably a cast hole or a separate bore that has been drilled after casting. The counterweight applicator 17 comprises a duct 18, preferably a rigid pipe, through which the balancing material 19 is applied to the balancing location. The pipe comprises a linear portion 18a and an end part 18b, which is at an angle of approximately 90° to the linear portion. The pipe 18 is passed into the roll 10 through the hole 15. The balancing material is a resilient, elastic fluidized mix, which hardens to its ultimate hardness only after it has been placed at the balancing location on the inner face 12 of the roll 10 in the way shown in the figure (arrow L₁). To the end of the pipe 18, an actuator 20 is fitted, by whose means the balancing material 19 is carried to the balancing point. Preferably, said device 20 consists of a cylinder, which includes a piston 22. The balancing material is sucked into the space between the cylinder mantle 23 and the piston 22 out of a tank 24 or equivalent. When the piston 22 is displaced in the direction L₂ by means of the shaft 21, the balancing material is extruded through the pipe 18 to the balancing point, and carriage of the balancing agent back into the tank 24 is prevented by means of back stop valves 25. As the balancing material 19, polyurethane or silicone mix or epoxy resin is used.

Fig. 1B shows a solution in accordance with the invention. The balancing material 19 is passed through a linear pipe 18 into connection with the support and fixing construction 26 for the balancing material 19, which construction is, in this embodiment of the invention, a net construction, whose net part is placed at a distance from the inner wall of the roll mantle. The equipment comprises one or several pipes 18, in which case, when several pipes are used, the components of the balancing material, such as polyurethane, are not mixed together until in the nozzle part connected to the ends of the pipes. If a single-component material, such as fluidized metal, is used as the balancing material, it is possible to operate with one pipe.

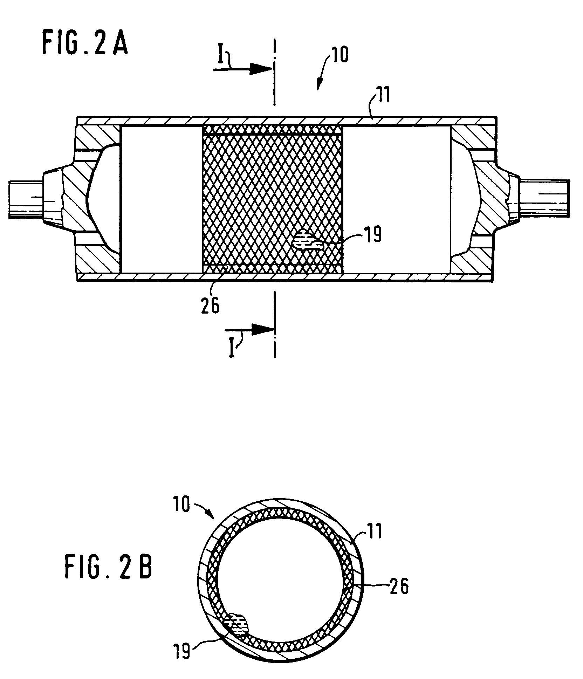

Fig. 2A is a sectional view of a balancing-material fixing method and a balancing construction in accordance with the invention.

The balancing construction comprises a support and fixing construction 26 for the balancing material, which has been passed into the interior of the roll mantle 11. The support and fixing construction 26 is preferably a circumferential net construction of a width of about 800...1000 mm, which is in contact with the roll face 12 over a part of the distance, but partly placed apart from the roll face. The net construction itself operates as a fixing base for the fluidized balancing material that hardens subsequently and as a support construction for the balancing material. Through the openings 27 in the net construction, the fluidized balancing material 19 is carried to both sides of the net construction before it hardens and is fixed to the net construction.

As is shown in Fig. 2A, the support and fixing construction 26 is preferably a net construction, which has been shrunk to a wave shape. By means of the shaping, the support and fixing construction 26 can be given a sufficient rigidity. In this way, the support and fixing construction 26 can be fixed reliably to the inner face of the roll mantle so that it moves neither radially nor axially.

Fig. 2B is a sectional view taken along the line I-I in Fig. 2A. As is shown in Fig. 2B, the support and fixing construction 26 is a circumferential construction, preferably of circular section, which comprises a shrunk wave form, the construction being in contact with the inner face 12 of the roll mantle over a part of the distance only, preferably at the crests of the waves. The support and fixing construction 26 is preferably a net construction, in which case the net operates as the support and fixing construction for the balancing material, such as polyurethane, and is in contact with the roll by means of press-on fitting or spring force.

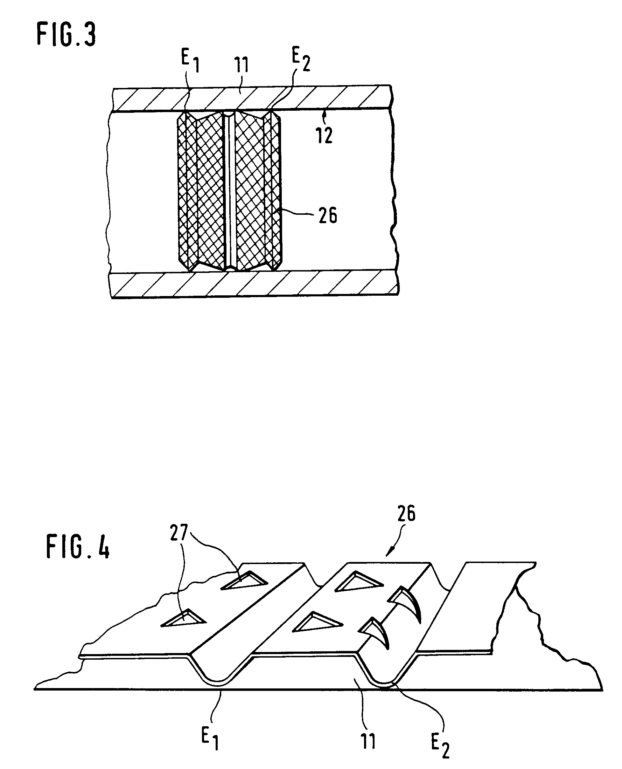

Fig. 3 is a sectional view of a roll which comprises a net construction as the support and fixing construction 26 for the balancing material 19, to which net construction the balancing material 19 is applied and to which it is fixed and hardens. The wave shape has been applied to the support and fixing construction 26 so that the wave crests E₁,E₂... pass along a circumferential and circular path. In such a case, the construction obtains sufficient rigidity so that the support and fixing construction 26 can be kept in contact with the roll by means of a press-on fitting.

Fig. 4 shows a second preferred embodiment of the support and fixing construction 26, wherein the circumferential construction has been made of a metal sheet that has been worked to wave shape, into which sheet openings 27 have been punched, which permit positioning of the balancing material 19 to both sides of the plate construction and, thus, enable the plate construction to operate as a central support construction for the balancing material. The support and fixing construction is in contact with the inner face of the roll 10 by means of a press-on fitting. The support and fixing constructions 26 shown in Figs. 1B...4 have been fixed to the inner face 12 of the roll 10 to be balanced by means of press-on fittings.

## Claims

1. Method for fixing of a material that is used for balancing of roll, wherein the balancing material (19) that is fluidized in the balancing of the roll is placed inside the roll (10) at the location required by the balancing, where it is fixed and hardens, **characterized** in that, before the fluidized balancing material (19) is placed into the roll (10), a support and fixing construction (26) for the fluidized balancing material is placed into the roll (10) interior, which construction will be placed in contact with the inner face of the roll (10) over a part of the axial distance only, and that the support and fixing construction (26) comprises openings (27) or equivalent, which permit the balancing material (19) to be placed at both sides of the support and fixing construction (26) before the fluidized balancing material hardens and is fixed at the location required by the balancing in the support and fixing construction (26).

2. Method as claimed in claim 1, **characterized** in that, in the method, a net construction is used as the support and fixing construction (26).

3. Method as claimed in claim 1, **characterized** in that, in the method, a plate construction is used as the support and fixing construction (26), which plate construction comprises holes (27), through which the balancing material (19) flows before it hardens and is fixed to the support and fixing construction (26).

4. Method as claimed in any of the preceding claims, **characterized** in that, as the support and fixing construction (26), a construction is used that has been shaped circumferentially and that has a substantially circular section.

5. Construction used in the balancing of a roll, in which balancing a fluidized balancing material (19) is used which is passed into the roll interior to the location required by the balancing, **characterized** in that a support and fixing construction (26) is provided for the balancing material (19), which support and fixing construction (26) is a circumferential construction, which is in contact with the inner face (12) of the roll (10) over a part of the axial distance only and which support and fixing construction (26) comprises openings (27) or equivalent, through which the fluidized balancing material (19) flows to both sides of the support and fixing construction (26) before it hardens and is fixed to the support and fixing construction (26), whereby the support and fixing construction (26) forms a support and fixing base for the balancing material (19).

6. Construction as claimed in claim 5 and used for the balancing of a roll (10), **characterized** in that the support and fixing construction (26) is a circumferential construction of circular section.

7. Construction as claimed in claim 5 or 6 and used for the balancing of a roll, **characterized** in that the support and fixing construction (26) is a net construction.

8. Construction as claimed in any of the preceding claims 5 or 6 and used for the balancing of a roll, **characterized** in that the support and fixing construction (26) is a plate-like construction that has been worked into cave shape and that comprises openings (27) made into the plate construction and permitting positioning of the balancing material (19) to both sides of the plate construction at the location required by the balancing.

9. Construction as claimed in any of the preceding claims 5 to 8 and used for the balancing of a roll, **characterized** in that the support and fixing construction (26) comprises a wave shape, the construction being in contact with the inner face of the roll (10) over part of the distance only at the wave crests.

10. Construction as claimed in any of the preceding claims 5 to 9 and used for the balancing of a roll, **characterized** in that the support and fixing construction (26) is fixed to the inner face of the roll (10) by means of a press-on fitting.

## Patentansprüche

1. Verfahren zum Fixieren eines Materials, das für das Ausgleichen einer Walze verwendet wird, wobei das bei dem Ausgleichen der Walze fluidisierte Ausgleichmaterial (19) innerhalb der Walze (10) an der für das Ausgleichen erforderlichen Stelle angeordnet ist, an der es fixiert wird und härtet, dadurch gekennzeichnet, daß, bevor das fluidisierte Ausgleichmaterial (19) in der Walze (10) angeordnet wird, in dem Inneren der Walze (10) eine Stütz- und Fixierkonstruktion (26) für das fluidisierte Ausgleichmaterial angeordnet wird, wobei die Konstruktion lediglich über einen Teil der axialen Strecke in Kontakt mit der Innenfläche der Walze (10) angeordnet wird, und daß die Stütz- und Fixierkonstruktion (26) Öffnungen (27) oder dergleichen aufweist, die es dem Ausgleichmaterial (19) erlauben, an beiden Seiten dem Stütz- und Fixierkonstruktion (26) angeordnet zu werden, bevor das fluidisierte Ausgleichmaterial härtet und an der für das Ausgleichen in der Stütz- und Fixierkonstruktion (26) erforderlichen Stelle fixiert ist.

2. Verfahren nach Anspruch 1, dadurch gekennzeichnet, daß bei dem Verfahren als Stütz- und Fixierkonstruktion (26) eine Netzkonstruktion verwendet wird.

3. Verfahren nach Anspruch 1, dadurch gekennzeichnet, daß bei dem Verfahren als Stütz- und Fixierkonstruktion (26) eine Plattenkonstruktion verwendet wird, wobei die Plattenkonstruktion Löcher (27) aufweist, durch welche das Ausgleichmaterial (19) strömt, bevor es härtet und an der Stütz- und Fixierkonstruktion (26) fixiert wird.

4. Verfahren nach einem der vorhergehenden Ansprüche, dadurch gekennzeichnet, daß als Stütz- und Fixierkonstruktion (26) eine Konstruktion verwendet wird, die umfangsseitig geformt worden ist und die einen im wesentlichen kreisförmigen Schnitt aufweist.

5. Konstruktion, die beim Ausgleichen einer Walze verwendet wird, wobei bei dem Ausgleichen ein fluidisiertes Ausgleichmaterial (19) verwendet wird, welches zu der für das Ausgleichen erforderlichen Stelle in das Walzeninnere geleitet wird, dadurch gekennzeichnet, daß eine Stütz- und Fixierkonstruktion (26) für das Ausgleichmaterial (19) vorgesehen ist, wobei die Stütz- und Fixierkonstruktion (26) eine umfangsseitige Konstruktion ist, die mit der Innenfläche (12) der Walze (10) lediglich über einen Teil der axialen Strecke in Kontakt steht, wobei die Stütz- und Fixierkonstruktion (26) Öffnungen (27) oder dergleichen aufweist, durch welche das fluidisierte Ausgleichmaterial (19) zu beiden Seiten der Stütz- und Fixierkonstruktion (26) fließt, bevor es härtet und an der Stütz- und Fixierkonstruktion (26) fixiert wird, wodurch die Stütz- und Fixierkonstruktion (26) für das Ausgleichmaterial (19) eine Stütz- und Fixierbasis bildet.

6. Konstruktion nach Anspruch 5, die für das Ausgleichen einer Walze (10) verwendet wird, dadurch gekennzeichnet, daß die Stütz- und Fixierkonstruktion (26) eine umfangsseitige Konstruktion mit kreisförmigem Querschnitt ist.

7. Konstruktion nach Anspruch 5 oder 6, die für das Ausgleichen einer Walze verwendet wird, dadurch gekennzeichnet, daß die Stütz- und Fixierkonstruktion (26) eine Netzkonstruktion ist.

8. Konstruktion nach einem der vorhergehenden Ansprüche 5 oder 6, die für das Ausgleichen einer Walze verwendet wird, dadurch gekennzeichnet, daß die Stütz- und Fixierkonstruktion (26) eine plattenartige Konstruktion ist, die zu einer Wellenform bearbeitet worden ist und die Öffnungen (27) aufweist, die in der Plattenkonstruktion eingearbeitet worden sind und das Positionieren des Ausgleichmaterials (19) an beiden Seiten der Plattenkonstruktion an einer für das Ausgleichen erforderlichen Stelle gestatten.

9. Konstruktion nach einem der vorhergehenden Ansprüche 5 bis 8, die für das Ausgleichen einer Walze verwendet wird, dadurch gekennzeichnet, daß die Stütz- und Fixierkonstruktion (26) eine Wellenform aufweist, wobei die Konstruktion lediglich über einen Teil der Strecke an den Wellenbergen mit der Innenfläche der Walze (10) in Kontakt steht.

10. Konstruktion nach einem der vorhergehenden Ansprüche 5 bis 9, die für das Ausgleichen einer Walze verwendet wird, dadurch gekennzeichnet, daß die Stütz- und Fixierkonstruktion (26) mit Hilfe einer Anpress-Passung an der Innenfläche der Walze (10) fixiert ist.

## Revendications

1. Procédé pour la fixation d'un matériau (19) d'équilibrage d'un rouleau, dans lequel ce matériau, qui est fluidisé pour l'équilibrage du rouleau, est placé à l'intérieur du rouleau (10) en un emplacement nécessaire à l'équilibrage, où il est fixé et durci, caractérisé en ce que, avant que le matériau d'équilibrage fluidisé (19) ne soit placé dans le rouleau (10),une structure de support et de fixation (26) pour le matériau d'équilibrage fluidisé est placée à l'intérieur du rouleau (10), laquelle structure est mise en contact avec la face interne du rouleau (10) seulement sur une partie de sa longueur axiale,et en ce que cette structure comprend des ouvertures (27) ou équivalentes,qui permettent le passage du matériau d'équilibrage (19) sur ses deux côtés avant que le matériau d'équilibrage fluidisé ne se durcisse et ne soit fixé à l'emplacement nécessaire à l'équilibrage dans la structure de support et de fixation (26).

2. Procédé selon la revendication 1, caractérisé en ce que l'on utilise une structure de support et de fixation (26) en forme de filet.

3. Procédé selon la revendication 1, caractérisé en ce que l'on utilise en tant que structure de support et de fixation (26) une structure en forme de plaque qui comprend des trous (27) par lesquels s'écoule le matériau d'équilibrage (19) avant qu'il ne se durcisse et ne soit fixé sur ladite structure.

4. Procédé selon l'une quelconque des revendications précédentes, caractérisé en ce qu'on utilise en tant que structure de support et de fixation (26) une structure profilée circonférentiellement et dont la section est sensiblement circulaire.

5. Construction utilisée pour l'équilibrage d'un rouleau, dans laquelle on utilise à cet effet un matériau d'équilibrage fluidisé (19) envoyé à l'intérieur du rouleau à l'emplacement nécessaire à l'équilibrage, caractérisée en ce qu'il est prévu une structure de support et de fixation (26) pour le matériau d'équilibrage (19), laquelle structure (26) est circonférentielle et en contact avec la face interne (12) du rouleau (10) seulement sur une partie de sa longueur axiale,et laquelle structure de support et de fixation (26) comprend des ouvertures (27) ou équivalentes, par lesquelles le matériau d'équilibrage fluidisé (19) s'écoule sur les deux côtés de la structure (26) avant qu'il ne se durcisse et ne soit fixé à la structure de support et de fixation (26), celle-ci formant ainsi une base de support et de fixation pour le matériau d'équilibrage (19).

6. Construction selon la revendication 5 et utilisée pour l'équilibrage d'un rouleau (10), caractérisée en ce que la structure de support et de fixation (26) est circonférentielle et de section circulaire.

7. Construction selon la revendication 5 ou 6 et utilisée pour l'équilibrage d'un rouleau, caractérisée en ce que la structure de support et de fixation (26) est en forme de filet.

8. Construction selon l'une quelconque des revendications 5 et 6 et utilisée pour l'équilibrage d'un rouleau, caractérisée en ce que la structure de support et de fixation (26) a la forme d'une plaque ondulée qui comprend des ouvertures (27) permettant le passage du matériau d'équilibrage (19) sur les deux côtés de la structure à l'emplacement nécessaire à l'équilibrage.

9. Construction selon l'une quelconque des revendications 5 à 8 et utilisée pour l'équilibrage d'un rouleau, caractérisée en ce que la structure de support et de fixation (26) a une forme ondulée et est en contact avec la face interne du rouleau (10) seulement sur une partie de sa longueur et au niveau des crêtes des ondulations.

10. Construction selon l'une quelconque des revendications 5 à 9 et utilisée pour l'équilibrage d'un rouleau, caractérisée en ce que la structure de support et de fixation (26) est fixée à la face interne du rouleau (10) au moyen d'un emmanchement par pression.
